# DEMANDE DE BREVET EUROPEEN

(11) **EP 1 063 045 A1**
(43) Date de publication de la demande: **27.12.2000**
(21) Numéro de dépôt: 00401774.5
(22) Date de dépôt: 21.06.2000
(51) Int. Cl.: B23K 11/04

(54) **Installation de soudage par étincelage**

(30) Priorité: 23.06.1999 FR 9908032
(71) Demandeur: VAI CLECIM, 92400 Courbevoie (FR)
(72) Inventeur: Legoupil, Jean-Luc, 75008 Paris (FR); Gobez, Pascal, 92380 Garches (FR)
(74) Mandataire: Le Brusque, Maurice

(57) **Abrégé**

L'invention a pour objet une installation de soudage de bandes métalliques comprenant deux organes de maintien (2, 2') des extrémités des deux bandes, montés respectivement sur un bâti fixe (1) et un bâti mobile (1'), des moyens de cisaillage de deux bords parallèles en vis à vis (ml, m2) sur les extrémités des deux bandes (M1, M2), et des moyens (3) d'alimentation électrique pour leur soudure bord à bord par étincelage.

Conformément à l'invention, les moyens d'alimentation électrique des deux bandes comprennent un générateur (3) de courant continu associé à des moyens (34) de modulation continue de la tension appliquée entre les organes de maintien (2, 2') en fonction des dimensions des bandes (M1, M2) en section transversale et de la nature des métaux à souder.

## Description

L'invention a pour objet une installation de soudage bord à bord, par étincelage, de bandes métalliques défilant successivement le long d'un axe longitudinal.

Dans les installations métallurgiques, en particulier de production de bandes métalliques, on est souvent amené à souder des bandes l'une à la suite de l'autre par soudure électrique, par exemple, à l'entrée des installations de décapage de bandes laminées à chaud, à l'entrée des laminoirs à froid du type Continu-Continu, et à l'entrée des installations dites "couplées" qui effectuent sur une seule ligne le décapage et le laminage à froid des tôles.

D'une façon générale, pour réaliser un travail en continu, on doit souder l'extrémité aval, dans le sens de défilement, d'une bande en fin de traitement à l'extrémité amont de la bande suivante. On est ainsi amené à réaliser une soudure suivant une ligne transversale, généralement perpendiculaire à l'axe de défilement.

Différents moyens sont utilisés à cet effet. On peut, par exemple, appliquer les extrémités de deux bandes l'une sur l'autre et les souder par passage de courant électrique entre deux molettes se déplaçant transversalement.

Mais, dans certains cas, il est nécessaire que les deux bandes soient soudées bout à bout de façon à ne pas produire de surépaisseur. Il faut alors cisailler les deux extrémités, respectivement aval et amont, des deux bandes, puis les rapprocher l'une de l'autre pour que les bords en vis à vis viennent au contact, la soudure étant produite par étincelage.

Une installation de ce genre comprend donc divers outillages travaillant successivement.

Tout d'abord, les extrémités, respectivement aval et amont de la première et de la seconde bande sont cisaillées par un outillage de coupe permettant de réaliser deux bords, respectivement amont et aval, sur les extrémités des deux bandes qui sont fixées, pendant le cisaillage, par deux organes de maintien.

Ensuite, les deux bords cisaillés sont rapprochés l'un de l'autre et soudés par étincelage.

A cet effet, on utilise habituellement une soudeuse comprenant deux paires de mors de serrage montés, respectivement, sur un bâti fixe et sur un bâti mobile déplaçable longitudinalement pour réaliser le rapprochement des deux bandes, des moyens d'alimentation électrique assurant la mise sous tension des extrémités en vis à vis des deux bandes pour le soudage de celles-ci.

De plus, il est préférable d'appliquer les extrémités des bandes l'une sur l'autre sous une certaine pression, pour réaliser un effet de forgeage de la soudure.

Cependant, le cordon de soudure forme, sur les deux faces de la bande, des bourrelets qui doivent être éliminés pour ne pas gêner le passage de la partie soudée dans les différentes parties de la ligne de traitement. C'est pourquoi la machine comprend habituellement un outillage d'ébavurage et d'aplanissement de la soudure constitué, le plus souvent, d'une meule ou d'une raboteuse munie de couteaux qui éliminent les bourrelets, par déplacement transversal le long de la soudure.

La machine doit aussi être équipée d'un certain nombre de dispositifs annexes, par exemple un ou plusieurs dispositifs boucleurs donnant une certaine latitude de déplacement longitudinal de chaque bande sans agir sur les moyens de défilement, des moyens de centrage pour réaliser l'alignement parfait des deux bandes, ainsi qu'une encocheuse pour éliminer les extrémités de la soudure sur les bords latéraux des deux bandes, en particulier lorsque celles-ci n'ont pas des largeurs identiques.

Pour régler le parallélisme des bords cisaillés et déterminer leur espacement en fonction de l'épaisseur des bandes à souder, on utilise souvent une barre d'espacement que l'on interpose entre les deux bords qui viennent s'appliquer de part et d'autre de cette barre. Ces réglages augmentent la durée d'une opération de soudure et, en outre, nécessitent l'intervention d'un opérateur.

De telles installations sont donc assez compliquées et très encombrantes, les outillages étant utilisés l'un après l'autre selon l'ordre des opérations à effectuer.

Diverses dispositions ont été proposées pour simplifier les opérations et les réaliser rapidement, avec suffisamment de précision.

En particulier, pour diminuer le nombre de manoeuvres, on a proposé de réaliser toutes les opérations sans déplacement des bandes, en utilisant une cisaille double intégrée dans la machine et réalisant simultanément deux bords parfaitement parallèles sur les deux bandes qui restent serrées, pendant toutes les opérations, entre les mors des deux organes de maintien, respectivement fixe et mobile.

Par exemple, dans la disposition décrite dans le document FR-A-2311626, on utilise une cisaille à double guillotine qui vient s'interposer entre les mors de serrage pour réaliser simultanément la coupe des extrémités des deux bandes et est ensuite écartée latéralement pour permettre la mise en place d'un outillage de soudure constitué de deux paires de mâchoires formant des électrodes d'alimentation en courant. Ces électrodes sont placées, avec la cisaille, sur un cadre déplaçable perpendiculairement à l'axe de défilement de la bande et portant également un outillage d'ébavurage qui, dans une troisième position, réalise l'aplanissement de la soudure.

L'alimentation électrique de ces électrodes mobiles se fait donc par contact avec les deux organes de maintien, après serrage longitudinal de l'ensemble.

D'une façon générale, la conception des circuits électriques pose aussi de nombreux problèmes, compte tenu des puissances à mettre en jeu, de l'encombrement des appareillages et des conditions de fonctionnement.

Par exemple, les tôles à rabouter étant chauffées par effet Joule, elles doivent évidemment être placées sous une tension suffisante pour apporter l'énergie nécessaire pendant le processus d'étincelage et cette tension doit être réglée en fonction des dimensions, en épaisseur et en largeur, des tôles à souder, ces dimensions pouvant, d'ailleurs, varier en fonction du programme de fabrication.

Cependant, on a observé qu'il fallait aussi limiter la valeur de la tension d'alimentation pour diminuer la formation d'oxydes à l'interface pendant les opérations de soudage car ces oxydes sont une cause de fragilisation de la soudure.

Habituellement, les électrodes sont alimentées en courant alternatif au moyen d'un transformateur associé à des moyens de réglage de la tension appliquée.

Un transformateur capable d'apporter la puissance nécessaire est assez encombrant et, dans la disposition du document FR-A-2311626, il est placé au dessous du plan de défilement des bandes, sur une voie de circulation ménagée dans les fondations. Mais de ce fait, les circuits d'alimentation et les moyens d'isolement des électrodes peuvent être détériorés, lors des opérations de cisaillage et de soudure, par les chutes de cisaillage, les jets de métal produits par le processus d'étincelage et les résidus de soudure.

Pour éviter de tels inconvénients, il est possible de placer le transformateur au dessus du plan de défilement de la bande selon une disposition qui a été divulguée, par exemple, dans le document EP-A-0845309.

Ce document a pour objet une machine de soudage perfectionnée qui présente l'avantage, par rapport à la disposition précédente, de supprimer les électrodes mobiles, la puissance nécessaire au soudage étant amenée directement par les organes de maintien des deux bandes qui sont isolés par rapport au reste de la machine. On évite ainsi les résistances de contact entre les électrodes mobiles et les mors de serrage. De plus, une telle machine permet un réglage très précis des distances de porte-à-faux entre l'extrémité de chaque mors de serrage et le bord cisaillé correspondant de la bande.

Il résulte, cependant, de cette disposition,que les circuits parcourus par le courant, notamment en raison de leur géométrie, ont une impédance assez grande qui augmente la puissance à fournir pour le soudage et, par conséquent, la tension nécessaire pour le processus d'étincelage et le chauffage des bandes à une température permettant le soudage et le forgeage du joint.

Or, on a vu qu'une tension trop élevée présentait des inconvénients et les installations utilisées jusqu'à présent sont donc alimentées en courant alternatif sous une basse tension comprise, par exemple, entre 6 et 20 Volts efficace. Cependant, le réglage de la tension est effectué au moyen d'un dispositif à plots qui ne permet pas une véritable régulation des conditions de réalisation de la soudure. De plus, ce dispositif doit être motorisé, ce qui complique la réalisation du transformateur.

L'invention a pour objet des perfectionnements aux installations de soudage permettant de remédier à l'ensemble de ces inconvénients. En particulier, l'invention permet de simplifier les appareillages et de mieux contrôler le processus de soudage, en assurant, notamment, la régularité de formation des étincelles pendant les phases d'amorçage et d'étincelage.

L'invention s'applique donc, d'une façon générale, à une installation de soudage de ce type, pour le raccordement bord à bord de bandes métalliques défilant successivement suivant un axe longitudinal, comprenant un bâti fixe centré sur l'axe de défilement et sur lequel est monté un premier organe de maintien à deux mors pour le serrage de l'extrémité aval, dans le sens de défilement, d'une première bande, un bâti mobile centré sur l'axe de défilement et déplaçable parallèlement à celui-ci par rapport au bâti fixe, ledit bâti mobile portant un second organe de maintien à deux mors pour le serrage de l'extrémité amont d'une seconde bande suivant la première, des moyens de cisaillage de deux bords parallèles en vis à vis, respectivement aval et amont, sur les extrémités des deux bandes, après serrage de celles-ci respectivement dans le premier et le second organes de maintien, le cisaillage de chaque bord étant effectué à une distance déterminée en porte-à-faux par rapport aux mors de serrage correspondants, des moyens de commande du déplacement du bâti mobile vers le bâti fixe pour le rapprochement des bords des deux bandes et des moyens d'alimentation électrique ayant deux pôles reliés respectivement auxdites bandes pour leur soudure bord à bord par étincelage.

Conformément à l'invention, les moyens d'alimentation électrique des deux bandes comprennent un générateur de courant continu associé à des moyen de modulation continue de la tension appliquée entre les organes de maintien en fonction des dimensions des bandes en section transversale et de la nature des métaux à souder.

De façon particulièrement avantageuse, le générateur de courant continu comprend un transformateur triphasé dont les primaires sont alimentés en courant alternatif triphasé et dont les secondaires sont reliés, par l'intermédiaire d'un pont redresseur à diodes, à deux pôles d'alimentation sur lesquels sont branchés respectivement les deux organes de maintien de bandes.

Dans un mode de réalisation préférentiel, les primaires du transformateur triphasé sont reliés respectivement aux trois phases d'un réseau alternatif par des dispositifs à thyristors commandés par impulsions en synchronisme avec le courant alternatif pour la modulation de la tension appliquée.

Avantageusement, les secondaires du transformateur triphasé sont reliés aux deux pôles d'alimentation par l'intermédiaire d'un pont redresseur hexaphasé du type "Pont de Graetz".

Grâce à ces dispositions, il est possible de souder par étincelage des tôles métalliques dont l'épaisseur peut aller, par exemple, de 0,8 mm à 8 mm et dont la largeur peut dépasser 2000 mm, en réglant de façon continue la tension entre les bandes, et sans dépasser une tension de pas 15 V pour les plus grandes dimensions.

Mais l'invention sera mieux comprise par la description suivante de certains modes de réalisation donnés à titre d'exemple et représentés sur les dessins annexés.

La figure 1 est une vue schématique, en élévation, d'une installation de soudage.

La figure 2 est un schéma d'un premier mode de réalisation d'un circuit d'alimentation d'une circuit d'alimentation continue.

La figure 3 est un schéma d'un autre mode de réalisation du circuit d'alimentation.

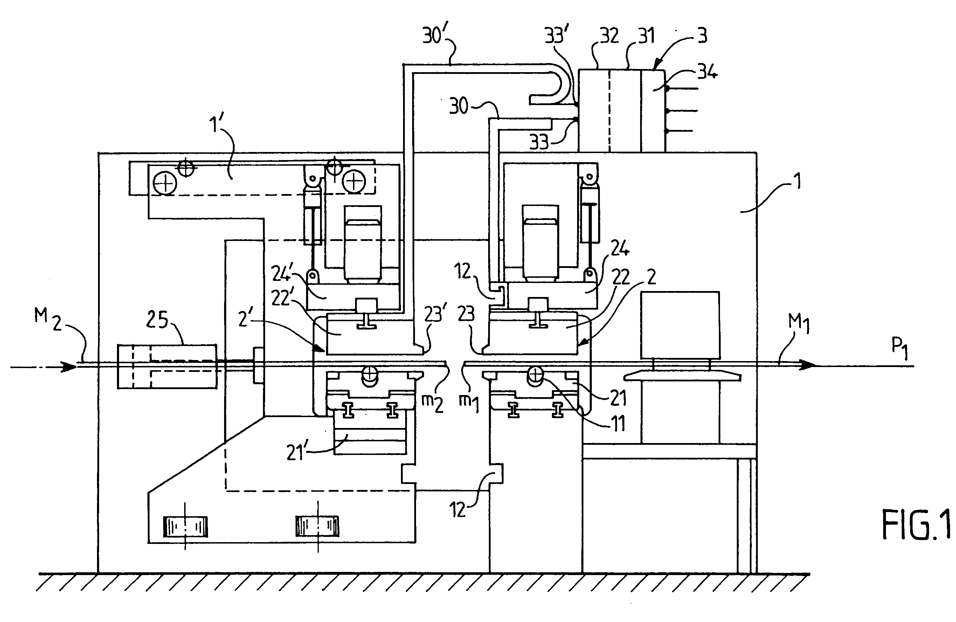

Sur la figure 1, on a représenté schématiquement une installation de soudage du type décrit dans le document EP-A-0845309 déjà cité. Une telle installation comprend un bâti fixe 1 sur lequel est monté un premier organe de maintien 2 à deux mors 21, 22, pour le serrage de l'extrémité aval, dans le sens de défilement, d'une première bande M1 et un bâti mobile 1' monté coulissant sur le bâti fixe 1, parallèlement à l'axe de défilement des bandes, sous l'action de vérins hydrauliques 25 ou autres moyens équivalents. Le bâti mobile 2' porte un second organe de maintien 2' ayant deux mors 21', 22' pour le serrage de l'extrémité amont d'une seconde bande M2 suivant la première M1.

Dans la position représentée sur la figure 1, les deux bandes M1, M2 sont portés par des rouleaux 11 qui définissent le plan horizontal de défilement P1, les organes de maintien 2, 2' étant ouverts. Pour le raboutage des deux bandes, celles-ci sont serrées entre les mors des deux organes de maintien 2, 2' et un organe de cisaillage non représenté permet de couper des bords parfaitement parallèles sur les extrémités, respectivement aval et amont des deux bandes M1, M2. Par exemple, dans la disposition du document EP-A-0845309 on utilise une cisaille double constituée de deux paires de lames rotatives et qui se déplace, perpendiculairement à l'axe de défilement, en coulissant sur des parties de guidage 12 ménagées sur le bâti fixe 1. Une telle disposition permet de régler avec précision les distances de porte-à-faux entre chaque bord ml, m2 d'une bande et les extrémités 23, 23' des organes de serrage 2, 2' qui restent serrés, après le cisaillage, sur les bandes M1, M2, le bâti mobile 1' étant alors avancé de façon à rapprocher le bord amont m2 du bord aval ml de la première bande M1.

La tension de soudage est alors établie entre les deux tôles à rabouter. A cet effet, les deux organes de maintien 2, 2' qui sont réalisés en un matériau conducteur de l'électricité et isolés du reste de la machine, sont reliés à des moyens 3 d'alimentation électrique par des barres conductrices 31, 31'.

Comme on le sait, le soudage proprement dit comporte trois phases distinctes : l'amorçage, l'étincelage et le forgeage. Pendant l'amorçage, les tôles alimentées en courant électrique sont mises en contact l'une de l'autre, par une avance à vitesse lente du plateau mobile, inférieure à 1 mm/s, de façon à établir un régime stable d'étincelles. Au bout d'une course d'avance déterminée, la phase suivante, l'"étincelage", est déclenchée. Pendant cette deuxième phase, le plateau mobile est graduellement accéléré à une vitesse contrôlée, de façon à effectuer le chauffage approprié sur les deux faces des tôles à rabouter. Au bout d'une course déterminée, la phase suivante, le "forgeage", est déclenchée. Le forgeage consiste à effectuer le soudage par diffusion des deux tôles à rabouter, au moyen d'une avance brutale du plateau mobile, suivi d'un arrêt brusque, au bout d'une course déterminée. De préférence, pendant et après le forgeage, un courant électrique est établi à travers le joint soudé, de façon à modérer la vitesse de refroidissement de la tôle.

La machine représentée sur la figure 1 permet de réaliser ces trois phases successives de soudage mais diffère des dispositions habituelles par le fait que la source de courant 3 est un générateur de courant continu.

Dans un mode de réalisation préférentiel, le générateur de courant continu comprend un transformateur triphasé 3 ayant un circuit primaire 31 alimenté en courant alternatif triphasé et un circuit secondaire 32 relié, par l'intermédiaire d'un pont redresseur à diodes, à deux pôles 33, 33' sur lesquels sont branchées, respectivement, les barres conductrices 30, 30' d'alimentation des deux organes de maintien 2, 2' des bandes M1, M2. Par ailleurs, le générateur 3 est associé à des moyens 34 de modulation continue de la tension appliquée entre les deux pôles 33, 33'.

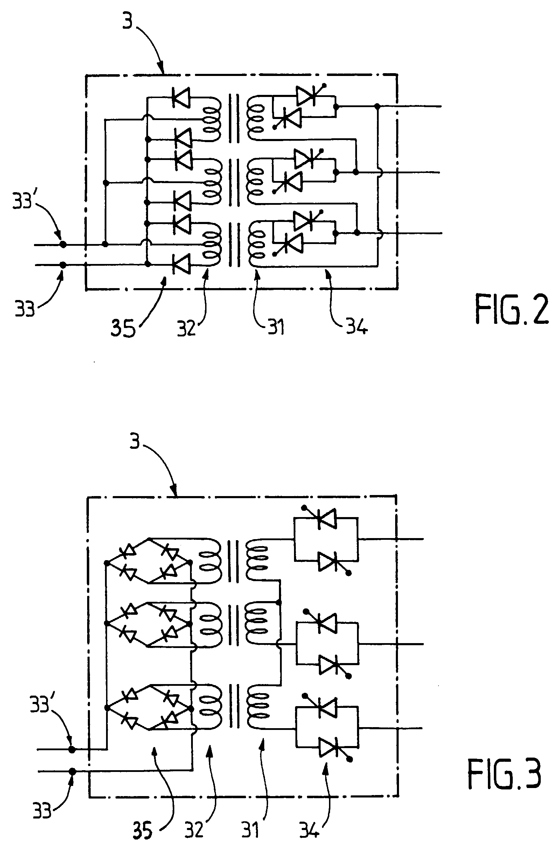

Sur la figure 2, on a représenté schématiquement un tel circuit d'alimentation en courant continu. Le primaire 31 comprend trois enroulement reliés respectivement aux trois phases et montés en triangle, chaque enroulement étant alimenté par une paire de deux thyristors montés tête-bêche et du type à gâchette permettant une commande par impulsions, en synchronisme avec la fréquence du courant alternatif. Il est ainsi possible de régler un retard à l'amorçage permettant de moduler de façon continue la tension aux bornes du secondaire. Celui-ci peut être constitué de trois enroulements reliés aux deux pôles d'alimentation 33, 33' par un pont redresseur hexaphasé du type pont de Graetz.

D'autres dispositions sont, cependant, possible. Par exemple, sur la figure 3, le redresseur associé au secondaire est un pont triphasé de diodes montées en double alternance. De plus, le primaire peut également être monté en étoile de la façon représentée sur la figure 3.

Grâce à cette disposition, il est possible de régler avec précision la tension appliquée en fonction de la section des tôles à souder, de façon à contrôler la régularité de formation des étincelles, même en cas de variation de la section. D'une façon générale, l'épaisseur des tôles à souder peut aller de 0,8 mm à 8 ou 10 mm, leur largeur allant de 450 mm à 2100 mm, par exemple. Pour de telles dimensions, la tension continue utilisée pour le soudage pourra être comprise entre 4 et 13 Volts.

Une telle alimentation en courant continu, présente de nombreux avantages.

Tout d'abord, elle permet de réduire la tension appliquée aux mors, pour une énergie donnée dépensée au contact des deux tôles pendant le soudage. De ce fait, on minimise l'oxydation du joint de soudure, qui, en courant alternatif dépend de la tension crête entre tôles.

En effet, dans le soudage par étincelage, le courant provoquant l'échauffement par effet Joule est établi, entre les bords en regard des deux tôles, par des "ponts" de court-circuit élémentaires qui fondent instantanément en dégageant des étincelles. De ce fait, l'échauffement global par effet Joule est la somme des effet de ces ponts élémentaires qui dépendent chacun de la valeur instantanée du courant et de la tension.

En courant alternatif, il se produit plusieurs dizaines de ponts et d'étincelles par période et une proportion importante de ces ponts aura donc lieu pour une valeur de la tension nettement supérieure à celle de la valeur efficace, ce qui augmente le risque d'oxydation du joint, en particulier pour certains métaux. Ces tensions excessives provoquent, en outre, des cratères importants qui affectent la qualité du joint.

En revanche, lorsque la machine est alimentée, selon l'invention, en courant continu, toutes les étincelles ont lieu sous une même tension et celle-ci peut donc être réduite.

Certes, l'utilisation du courant continu, qui nécessite des redresseurs, risque d'augmenter la complexité et l'encombrement de l'appareillage, d'autant plus que les composants doivent être refroidis. Cependant, l'évolution de la technique et, en particulier, les composants dont on peut disposer actuellement, permettent de réduire ces inconvénients.

De plus, par rapport à une alimentation en courant alternatif, il est moins important de réduire l'impédance du circuit d'alimentation des mors de soudage.

Ainsi, alors que l'impédance calculée à 50 Hz d'une soudeuse alimentée en courant alternatif doit rester inférieure à 70 micro-Ohms, des impédances calculées à 50Hz supérieures à 100 micro-Ohms sont acceptables avec une alimentation en courant continu telle que décrite ci-dessus car l'effet néfaste de la partie réactive de l'inductance sur le procédé de soudage est fortement réduit. Cet avantage permet d'adopter des dispositions constructives mieux optimisée pour les jeux de barres d'alimentation, les transformateurs de soudage et la géométrie des différents éléments de la soudeuse.

En particulier, les moyens d'alimentation 3 peuvent être placés à l'endroit le plus adéquat, par exemple sur la partie supérieure du bâti fixe 1 où l'on peut admettre un plus grand encombrement. En outre, le refroidissement est plus facile.

En outre, l'alimentation en courant triphasé redressé et sous une tension réduite que l'on peut moduler, permet de mieux contrôler la régularité de formation et la finesse des étincelles et, ainsi, de diminuer les boursouflures et autres défauts à l'interface des tôles soudées.

De même, il est possible, en faisant passer un courant continu modulé dans le joint soudé, d'assurer un contrôle efficace du refroidissement lent des tôles soudées, pour éviter les risques de fragilisation.

Les signes de référence insérés après les caractéristiques techniques mentionnées dans les revendications, ont pour seul but de faciliter la compréhension de ces dernières et n'en limitent aucunement la portée.

## Revendications

1. Installation de soudage bord à bord par étincelage de bandes métalliques défilant successivement, suivant un axe longitudinal le long d'un plan moyen (P1) sensiblement horizontal comprenant :
- un bâti fixe (1) centré sur l'axe de défilement des bandes et sur lequel est monté un premier organe de maintien (2) à deux mors (21, 22) pour le serrage de l'extrémité aval, dans le sens de défilement, d'une première bande (M1),
- un bâti mobile (1') centré sur l'axe de défilement et déplaçable parallèlement à celui-ci par rapport au bâti fixe (1), ledit bâti mobile (1') portant un second organe de maintien (2') à deux mors (21', 22') pour le serrage de l'extrémité amont d'une seconde bande (M2) suivant la première,
- des moyens de cisaillage de deux bords parallèles en vis à vis, respectivement aval (ml) et amont (m2), sur les extrémités des deux bandes (M1, M2), après serrage de celles-ci, respectivement dans le premier et le second organes de maintien (2, 2'), le cisaillage de chaque bord étant effectué à une distance déterminée en porte-à-faux par rapport aux mors de serrage correspondants (21, 22) (21',22'),
- des moyens (25) de commande du déplacement du bâti mobile (1') vers le bâti fixe (1) pour le rapprochement des bords (ml, m2) des deux bandes,
- des moyens (3) d'alimentation électrique ayant deux pôles (33, 33') reliés respectivement auxdites bandes (M1, M2) pour leur soudure bord à bord par étincelage,
caractérisé par le fait que les moyens d'alimentation électrique des deux bandes comprennent un générateur (3) de courant continu associé à des moyens (34) de modulation continue de la tension appliquée entre les organes de maintien (2, 2') en fonction des dimensions des bandes (M1, M2) en section transversale et de la nature des métaux à souder.

2. Installation de soudage selon la revendication 1, caractérisée par le fait que le générateur de courant continu (3) comprend un transformateur triphasé dont les primaires (31) sont alimentés en courant alternatif triphasé et dont les secondaires (32) sont reliés par l'intermédiaire d'un pont redresseur à diodes (35), à deux pôles d'alimentation (33, 33') sur lesquels sont branchés respectivement les deux organes de maintien (2, 2') de bandes (M1, M2).

3. Installation de soudage selon la revendication 2, caractérisée par le fait que les primaires (31) du transformateur triphasé (3) sont reliés respectivement aux trois phases d'un réseau d'alimentation par des dispositifs à thyristors (34) commandés par impulsions en synchronisme avec le courant alternatif, pour la modulation de la tension appliquée.

4. Installation de soudage selon l'une des revendication 2 et 3, caractérisée par le fait que les secondaires (32) du transformateur triphasé (3) sont reliés aux deux pôles d'alimentation (33, 33') par l'intermédiaire d'un pont redresseur hexaphasé (34) du type "Pont de Graetz".

5. Installation de soudage selon l'une des revendications précédentes caractérisée par le fait que les deux organes de maintien sont alimentés en courant continu sous une tension ne dépassant pas 15 V.
